# EUROPEAN PATENT APPLICATION

(11) **EP 1 557 760 A2**
(43) Date of publication of application: **27.07.2005**
(21) Application number: 05250030.3
(22) Date of filing: 06.01.2005
(51) Int. Cl.: G06F 9/45

(54) **Method and system for improving performance of java virtual machine**

(30) Priority: 17.01.2004 KR 2004003590
(71) Applicant: Samsung Electronics Co., Ltd., Suwon-si, Gyeonggi-do 442-742 (KR)
(72) Inventor: Kwon, Ho-bum, Gangnam-gu Seoul (KR); Romanovski, Alexei, Bundang-gu Seongnam-si Gyeonggi-do (KR); Choi, Jung-pil, Seongnam-si Gyeonggi-do (KR); Cho, Woong-suk, Gwangjin-gu Seoul (KR)
(74) Representative: Davies, Robert Ean

(57) **Abstract**

A method and system for improving the performance of a Java virtual machine (600) includes extracting a byte-code of a method constituting a Java class; combining the extracted byte-code to generate a second code with a predetermined byte size and allocating the second code to a data structure of a predetermined type; and executing the second code by an execution engine employed in the Java virtual machine.

## Description

The present invention relates to a method and system for improving performance of a Java (a registered trademark of Sun Microsystems, Inc.) virtual machine and, more particularly, but not exclusively, to a method for improving the execution speed of a Java program by converting a conventional Java byte-code based on the unit of one byte into a code having a data type of a 4-byte size that is expanded four times as large as the conventional Java byte-code.

Java programming languages have proliferated rapidly since being published in the middle of the 1990's, but they have had a disadvantage in that their codes have a slow operating speed compared to the codes composed by other programming languages such as C or C++. In order to address this disadvantage, two techniques applicable to a conventional interpreter-based Java virtual machine have been previously proposed: one is a dynamic code generation technique such as a JIT (Just-In-Time) compiler and the other is a static code generation technique such as an AOT (Ahead-Of-Time) compiler.

The Java platform basically comprises a Java virtual machine and Java classes. Class files are composed of information associated with data structures of the classes, including field information, method information, and so on. Execution codes of a method are formed of the byte-code, independent of hardware or an operating system.

By classifying the conventional Java virtual machine on the basis of the execution engine, it can be differentiated into an interpreter-based Java virtual machine, a Just-In-Time (JIT) compiler-based Java virtual machine, a Java virtual machine using the interpreter-based and JIT compiler-based Java virtual machines, an Ahead-Of-Time (AOT) compiler-based Java virtual machine or so on.

The interpreter-based Java virtual machine interprets the byte-codes of the method intended for execution one by one, thereby performing an application. The JIT compiler obtains a machine language code dependent on the current Java platform by compiling the byte-codes, and then executes the machine language code to conduct an application.

FIG. 1 illustrates a structure of a conventional Java virtual machine. A Java virtual machine 100 is comprised of an interpreter 110, a JIT or AOT compiler 120, a class loader 130 for loading a class, a run time system 140 for combining and operating the components 110, 120 and 130, application classes 150 to be executed, and system classes 160 that have been defined previously.

FIG. 2 illustrates a general configuration of a conventional Java class file.

A class file includes a class or interface definition and is comprised of various attributes, field information, method information and so on that are defined in the class. The method information defines a byte stream, which is called a byte-code and is intended to be executed in the interpreter. This byte-code is obtained from compiling a file (e.g., a file having an extension of "java") containing a Java source language statement.

The byte-code is similar to a program module ready for execution in that it is executed within a computer one byte at a time. But the instructions of the byte-code are actual instructions transmitted to the logical and abstract Java virtual machine. The byte-code can be compiled again by the JIT compiler so as to be compatible with a particular system platform, including that it need be interpreted by one byte only once, thereby accelerating the execution speed of the Java program. As one method for increasing the execution speed of the Java program in the interpreter, there is a "Threaded Interpreter" technique that writes the addresses of the op-code handler within the interpreter on a position of the op-code within the byte-code.

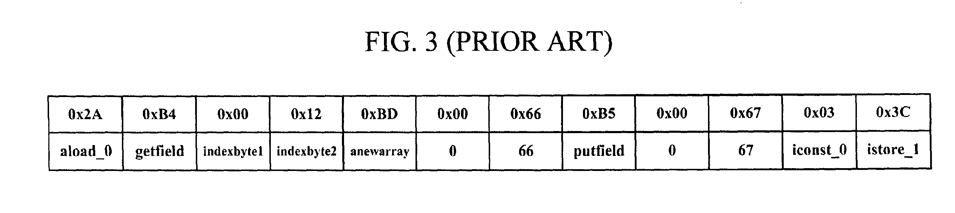

FIG. 3 illustrates a byte-code to be executed in a conventional Java virtual machine.

The instructions of the byte-code are composed of an operand and an op-code, both of which have a size of one byte to discriminate performed operations. One op-code may include several operands. Both the op-code and each operand are stored in the unit of one byte, so that they are represented as continuous bytes in order to represent the operands having a size of one or more bytes. For example, a 16-bit value consists of two continuous bytes, and a 32-bit value consists of four continuous bytes.

In FIG. 3, the first line denotes the hexadecimal values of the actual byte-code, and the second line denotes the byte-code divided into op-codes and operands.

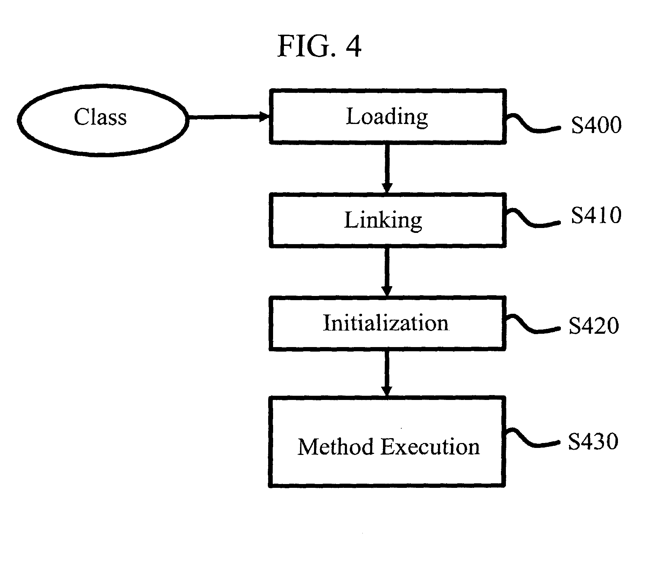

FIG. 4 illustrates a process of loading and executing a class in a conventional Java virtual machine.

An application class is loaded by a class loader of a Java virtual machine (S400), and goes through a linking process (S410) and an initialization process (S420), and then associated information is stored in a data structure within a runtime system, and the method is executed by the execution engine such as an interpreter or a JIT compiler (S430).

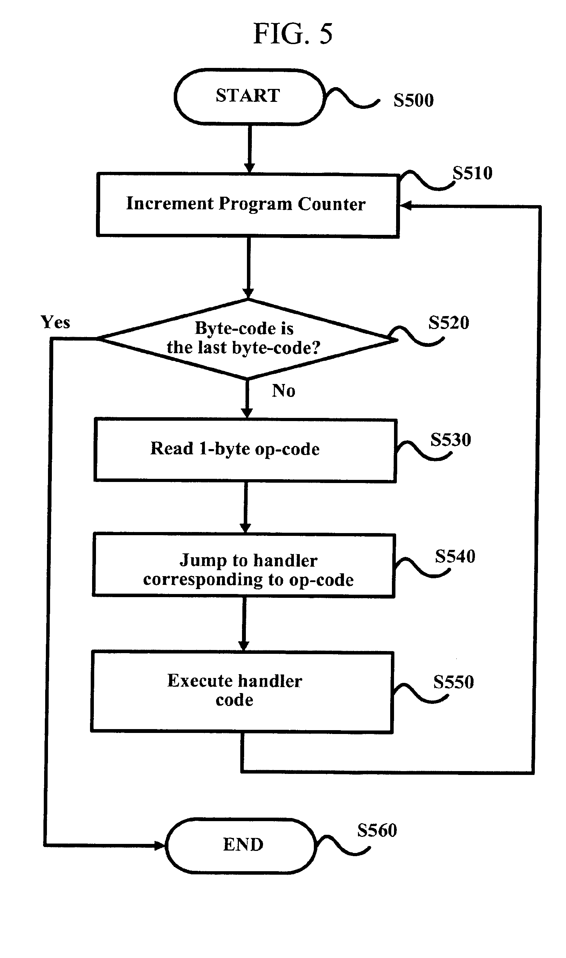

FIG. 5 is a flowchart showing an exemplary operation of executing each op-code in a conventional Java interpreter.

In a typical interpreter, the byte-code is executed in the manner shown in FIG. 5. When a method is invoked in the interpreter (S500), a Program Counter indicating the byte-code of the method is incremented (S510), and then it is determined whether the byte-code of the method is the last byte-code or not (S520). If the byte-code of the method is not the last byte-code, a 1-byte op-code is fetched (S530). Subsequently, the control goes to a handler corresponding to the fetched 1-byte op-code using a switch statement in the program, so that the handler is executed (S540 and S550). This process is repeated as many times as the size of the byte-code, and then the interpreting process for the method is terminated (S560).

The process shown in FIG. 5 can be represented with a Pseudo-code as follows:

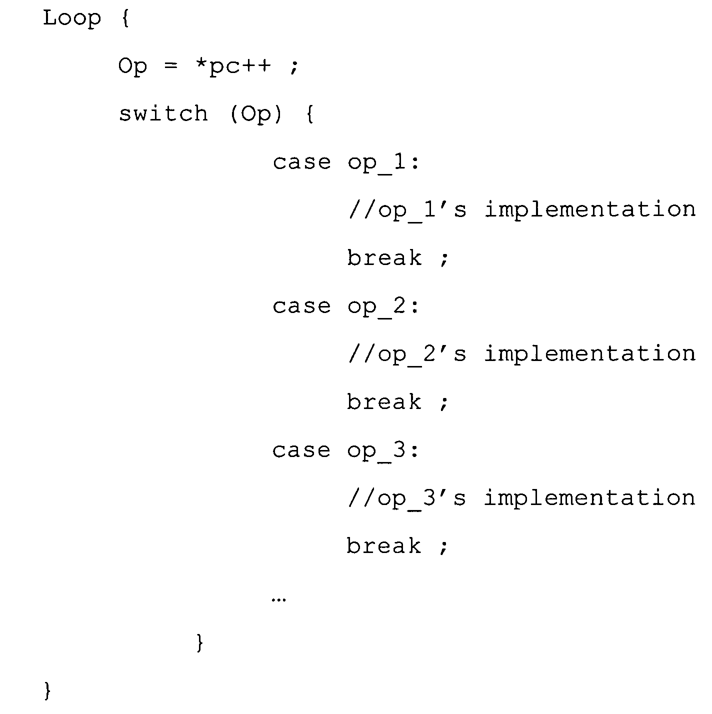

In the handler for the respective op-codes, if the data size of the operand required by the op-code is larger than 1 byte, the values of the operand are stored in continuous bytes. Thus, the continuous bytes are reconstructed into one significant value through the OR operator and the Shift operator according to each bit. For example, in a CPU using the "Little Endian" format, if operands required by a certain op-code A are in subsequent bytes byte1, byte2, byte3 and byte4, then byte4 represents the first bit to the eighth bit of a 32-bit value to be logically indicated, byte3 represents the ninth bit to the sixteenth bit of the 32-bit value to be logically indicated, byte2 represents the seventeenth bit to the twenty-fourth bit of the 32-bit value to be logically indicated, and byte1 represents the twenty-fifth bit to the thirty-second bit of the 32-bit value to be logically indicated.

Therefore, the 32-bit value actually required by the op-code A can be obtained by an operation like "[(bytel « 24)| (byte2 « 16)| (byte3 « 8) | byte4]". In the existing Java virtual machine, processes for combining such operands occur whenever the method is executed.

Because numerous CPUs now have a 32-bit architecture and use an internally built-in 32-bit register, fetching 32-bit data shows better performance as compared to fetching 8-bit data.

Also, in the conventional Java byte-code, because the op-code and the operand are stored in the unit of one byte, the bit size of the op-code is limited to 8 bits, which can represent a maximum of only 256 different bit configurations. Thus, once the predefined op-codes are excluded, the number of bit configurations remaining that can be devoted to newly definable op-codes is considerably limited. For this reason, there are many restraints on the dynamic code generation technique in which many re-definable op-codes are required.

For the operand, when the data size of the operand is greater than 1 byte, the operand will be arranged in continuous bytes, and the continuous bytes will be reconstructed through the OR operator and the Shift operator according to each bit whenever the method is executed. This process may function as considerable overhead when the Java program is executed. Therefore, there is a desire to improve the performance of the Java virtual machine by addressing these restraints.

Accordingly, embodiments of the present invention address the above-mentioned problems occurring in the prior art by providing a method for improving the execution speed of a Java virtual machine through conversion of a conventional Java byte-code of the unit of one byte into a code (hereinafter, referred to as an "int-code" code) having a data type of a 4-byte size that is expanded four times as large as the conventional Java byte-code. Embodiments of the present invention, however, are not required to solve any of the problems described herein.

According to a first aspect of the present invention there is provided a method for improving the performance of a Java virtual machine, the method comprising: extracting a byte-code of a method of a Java class; combining the extracted byte-code, generating a second code having a predetermined byte size, and allocating the second code to a predetermined type of data structure; and executing the second code by an execution engine of the Java virtual machine. In this case, it is preferable, but not necessary, that the byte size is dependent upon the data processing capability of a central processing unit equipped with the Java virtual machine.

It is preferable, but not necessary, that the data structure is one of an integer type.

It is preferable, but not necessary, that if at least two bytes of the extracted byte-code are combined to represent a logical value, the second step is a step for combining the at least two bytes, generating the second code having the predetermined byte size, and allocating the second code to the data structure of the predetermined type.

It is preferable, but not necessary, that when the extracted byte-code is an op-code using a wide operand, the second step is a step for converting the op-code into an op-code not using the wide operand, and generating the second code of the predetermined byte size having the converted op-code, and allocating the second code to the data structure.

According to a second aspect of the present invention, there is provided a system comprising a Java virtual machine, in which the Java virtual machine is operable to extract a byte-code of a method of a Java class, to combine the extracted byte-code, to generate a second code having a predetermined byte size, to allocate the second code to a data structure of a predetermined type, and to allow the second code to be executed by an execution engine of the Java virtual machine.

It is preferable, but not necessary, that the byte size is dependent upon the data processing capability of a central processing unit equipped with the Java virtual machine.

It is preferable, but not necessary, that when at least two bytes of the extracted byte-code are combined to represent a logical value, the system combines the at least two bytes, and generates the second code having the predetermined byte size.

It is preferable, but not necessary, that when the extracted byte-code is a byte-code using a wide operand, the system converts the op-code using the wide operand into an op-code not using the wide operand, and generates the second code of the predetermined byte size having the converted op-code.

For a better understanding of the invention, and to show how embodiments of the same may be carried into effect, reference will now be made, by way of example, to the accompanying diagrammatic drawings in which:

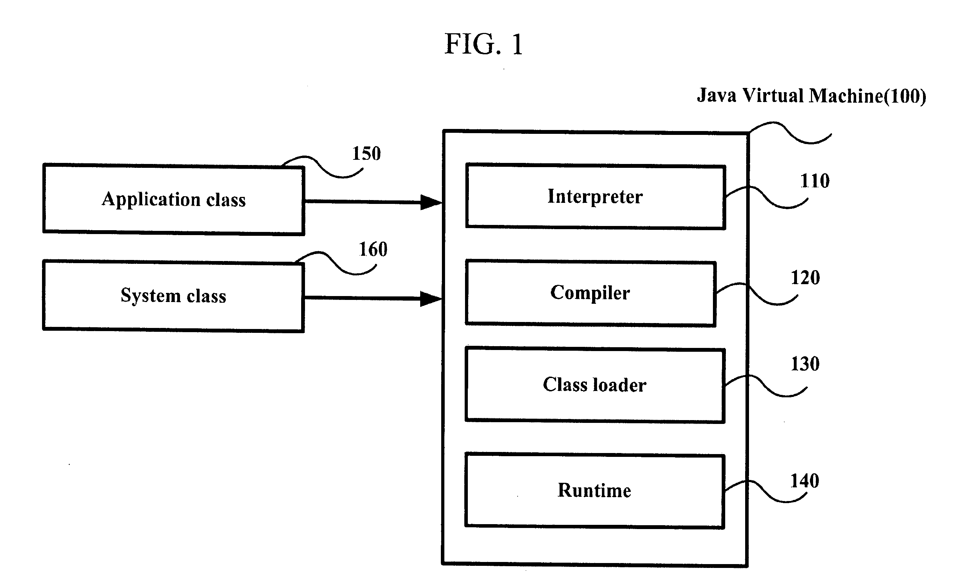

FIG. 1 illustrates a structure of a conventional Java virtual machine;

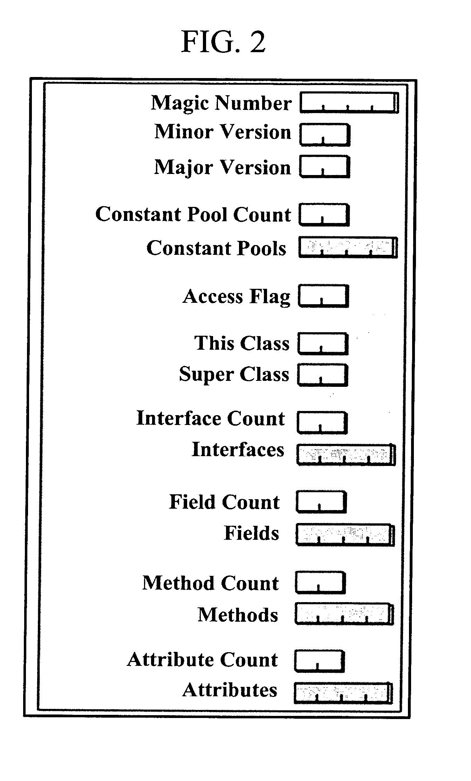

FIG. 2 illustrates a general construction of a conventional Java class file;
FIG. 3 illustrates a byte-code executed in a conventional Java virtual machine;
FIG. 4 illustrates a process for class loading and executing in a conventional Java virtual machine;
FIG. 5 is a flowchart showing one exemplary operation executing each op-code in a conventional Java interpreter;

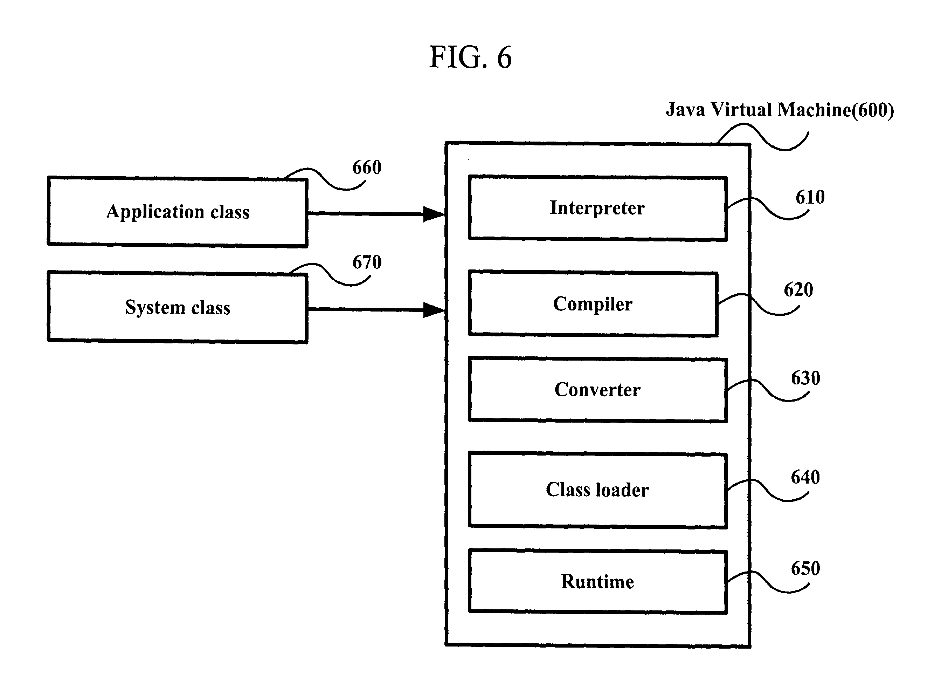

FIG. 6 is a block diagram showing a structure of a Java virtual machine including a converter according to an exemplary embodiment of the present invention;

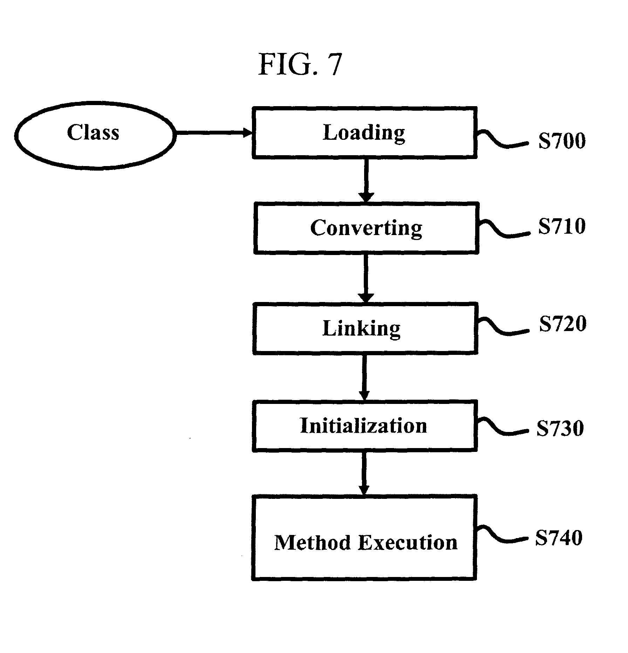

FIG. 7 illustrates a process of loading and executing a class in a Java virtual machine according to an exemplary embodiment of the present invention;

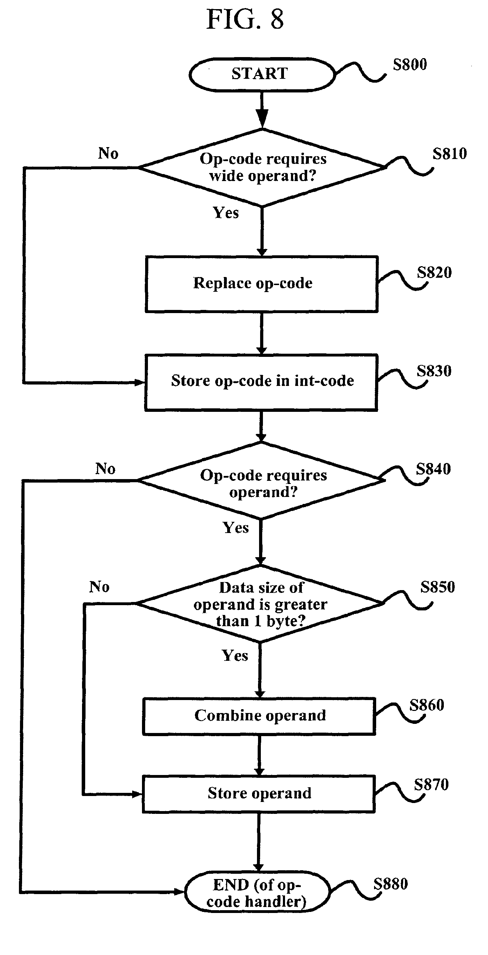

FIG. 8 is a flowchart of one example showing a process of converting a byte-code according to an exemplary embodiment of the present invention; and

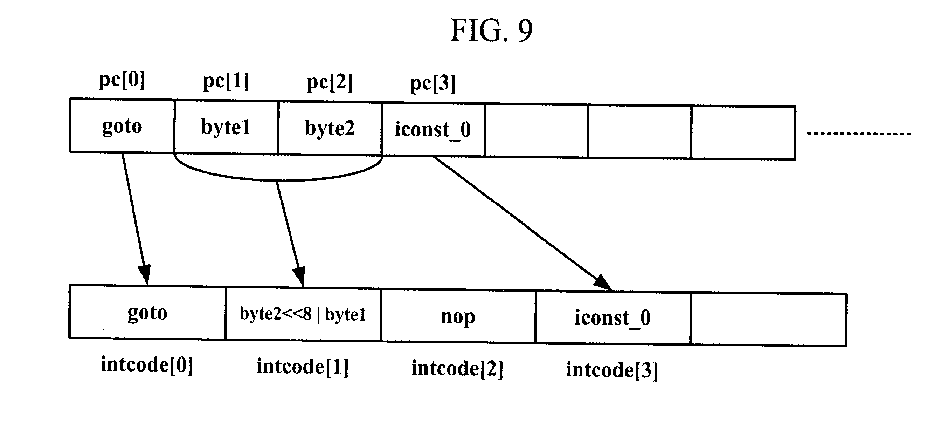

FIG. 9 illustrates a byte-code executed in a Java virtual machine according to an exemplary embodiment of the present invention.

Hereinafter, description will be made in further detail regarding a method and system for improving performance of a Java virtual machine according to various illustrative, non-limiting embodiments of the present invention with reference to the accompanying drawings.

FIG. 6 is a block diagram showing a structure of a Java virtual machine including a converter according to an exemplary embodiment of the present invention.

FIG. 6 illustrates the structure of the Java virtual machine including a converter 630 not found in a conventional Java virtual machine, wherein the converter 630 converts a 1-byte byte-code into a 4-byte byte-code by arranging four bytes of the byte-code, according to an exemplary embodiment of the present invention. In other words, the Java virtual machine 600 is further provided with the converter 630, in addition to an interpreter 610, a JIT compiler 620, a class loader 640, a run time 650, an application class 660 and a system class 670, with which the conventional Java virtual machine is provided. The converter 630 can be realized in a thread type.

FIG. 7 illustrates a process of loading and executing a class in a Java virtual machine according to an exemplary embodiment of the present invention.

A new class is loaded in the Java virtual machine 600 by the class loader 640 (S700), and then the converter 630 is invoked. Subsequently, the converter 630 converts a byte-code into an int-code by arranging four 1-byte byte-codes with respect to each method declared in the loaded class (S710).

After the step S710, and similarly to the steps shown in the conventional method of FIG. 4, a linking process (S720) and an initialization process (S730) are carried out and then each method is executed by the execution engine (S740).

The process of the step S710 represented with a program code is as follows:

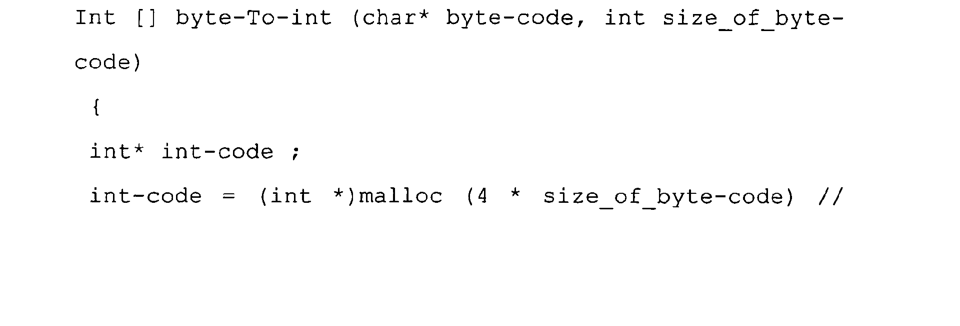

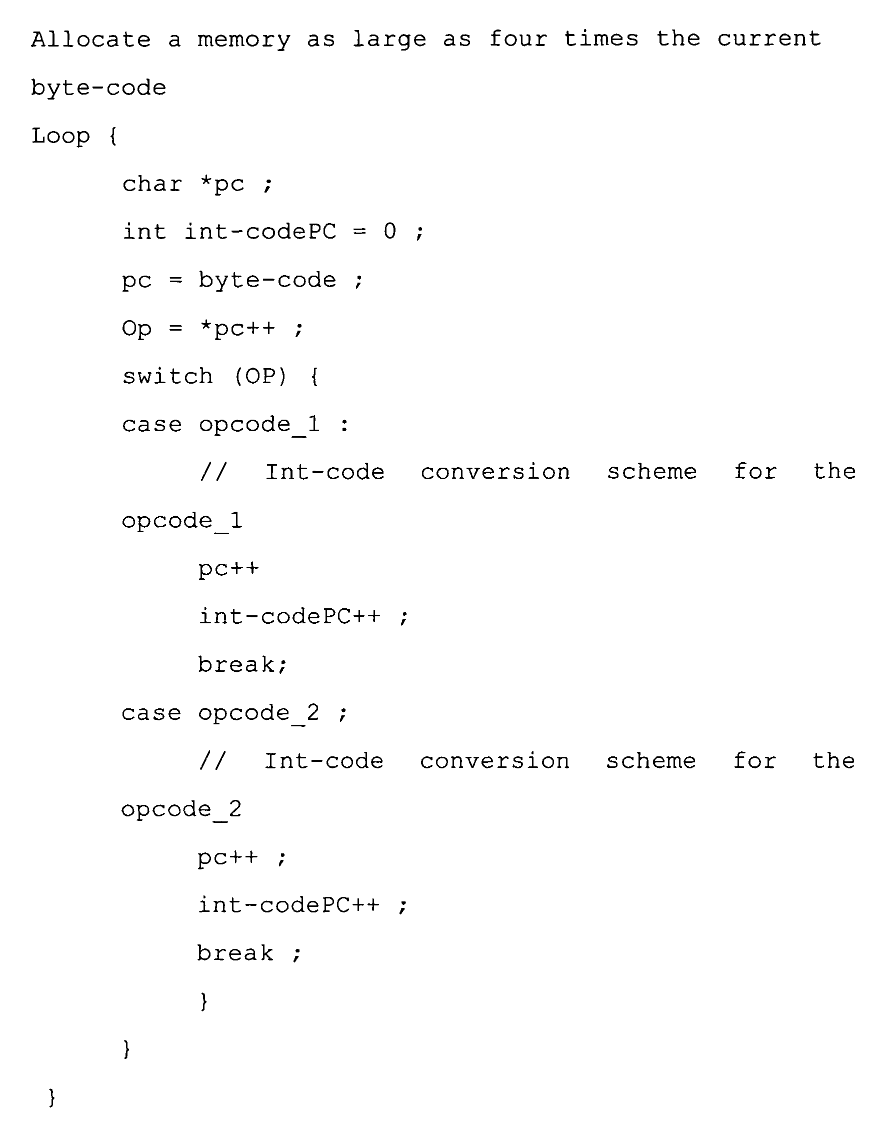

Hereinafter, the program code will be explained.

When the new class is loaded on the Java virtual machine, the converter 630 is invoked for each method declared within the class. In this case, the converter 630 receives a method byte-code and a size of the method byte-code as input parameters.

In the converter 630, a memory four times at least as large as the size of the method is allocated, and the allocated memory is indicated with the int-code that is a 32-bit integer pointer. The int-code is followed by a large loop, which continues to be circulated until no byte is fetched from the byte-code. The loop has one switch statement in which a routine for converting each op-code is defined.

FIG. 8 is a flowchart showing an exemplary process of converting a byte-code according to an exemplary embodiment of the present invention.

The process of converting the byte-code begins when a new class is loaded by the class loader (S800). First of all, it is checked whether an op-code indicated by a current program counter has a wide index as an operand (S810). In the case of the op-code not requiring the wide operand, the op-code is stored in an int-code (S830). [01] In the case of the op-code requiring the wide operand, the op-code plays the same role on the Java virtual machine version 2, but another op-code is found which does not require the wide operand, and then the found op-code is stored in the int-code instead (S810 and S820).

For example, "jsr_w" is one of the instructions defined in the Java virtual machine version 2, and plays the same role as the "jsr" instruction. Here, in the "jsr_w" instruction, a 32-bit wide index is assigned to the operand (as four continuous bytes), while in the "jsr" instruction, a 16-bit index is assigned to the operand (as two continuous bytes).

In other words, the "jsr" instruction is stored in an int-code array instead of the "jsr_w" instruction. Thereby, the op-codes accompanied with the wide operand are removed and, thus, these op-codes can be newly defined to be usable when a dynamic code is generated. In this manner, when the op-code is provided to a 32-bit element, 24 bits are kept empty in the 32-bit element except for the size (i.e., 8 bits) of the op-code. Here, the empty space of the 24 bits can be used as a storage field, for which a JIT technique is applied to the op-code and the subsequent several byte-codes, and the resulting code block address, etc. are inserted into the empty space, together with the rest of the one byte defining a new op-code indicating that the JIT technique is applied thereto.

After completing the step S830, both the program counter indicating the next byte-code and the int-codePC indicating the int-code are incremented. When the op-code is accompanied with an operand, the operand must be inserted into the int-code. In this case, it must be checked whether the operand is larger than one byte or not (S840 and S850). In other words, in the case of an operand made up of continuous bytes, before inserting the operand into the int-code, the operand is stored in one int-code after being combined in accordance with an Endian format of CPU that is currently used by both an OR operator for operation according to each bit and a Shift operator (S860 and S870). As the size of the operand combined with one or more bytes is not greater than four bytes, it is possible to store the operand in one element of the int-code. Since the function performing the operation, before executing the method, implements the above-mentioned operand combination only once, it can obtain better performance than the conventional interpreter. If the number of continuous bytes is n, the combined result is provided to one int-code, and then the other n-1 int-codes are provided with an empty space.

FIG. 9 illustrates a byte-code executed in a Java virtual machine according to an exemplary embodiment of the present invention.

For example, an original byte-code "goto" is converted into a value of "int-code [0]" by way of an int-code conversion algorithm. The reason of inserting a "nop" (i.e., a no-operation instruction) is to improve convenience when the interpreter is converted in an int-code scheme, and an inserted value may be different according to an implementing scheme.

By expanding the byte-code and converting it into the int-code or the 32-bit array in the Java virtual machine to which the interpreter or JIT compiler is applied, in accordance with the embodiment of the present invention, the present invention has an effect of improving the execution speed of the hardware equipped with a 32-bit CPU, and easily storing and monitoring additional information associated with the respective op-codes using the empty spaces of the array. Furthermore, because embodiments of the present invention may no longer use the wide op-code for handling the wide operand, they have an advantage that these unused op-codes can be re-defined as new user-defined op-codes.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method for improving the performance of a Java virtual machine, the method comprising:
extracting a byte-code of a method of a Java class;
combining the extracted byte-code, generating a second code having a predetermined byte size, and allocating the second code to a predetermined type of data structure; and
executing the second code by an execution engine of the Java virtual machine.

2. The method as claimed in claim 1, wherein the byte size is dependent upon a data processing capability of a central processing unit (CPU) equipped with the Java virtual machine.

3. The method as claimed in claim 1 or 2, wherein the data structure is an integer type of data structure.

4. The method as claimed in any of claims 1-3, wherein when at least two bytes of the extracted byte-code are combined to represent a logical value, the steps of combining, generating and allocating include combining the at least two bytes, generating the second code having the predetermined byte size, and allocating the second code to the data structure, respectively.

5. The method as claimed in any preceding claim, wherein when the extracted byte-code is an op-code using a wide operand, the steps of combining, generating and allocating include converting the op-code using the wide operand into an op-code not using the wide operand, generating the second code having a predetermined byte size including the converted op-code, and allocating the second code to the data structure, respectively.

6. A system comprising a Java virtual machine (600), in which the Java virtual machine is operable to extract a byte-code of a method of a Java class, to combine the extracted byte-code, to generate a second code having a predetermined byte size, to allocate the second code to a data structure of a predetermined type, and to allow the second code to be executed by an execution engine of the Java virtual machine.

7. The system as claimed in claim 6, wherein the data structure is one of an integer type.

8. The system as claimed in claim 6 or 7, wherein the byte size is dependent upon a data processing capability of a central processing unit (CPU) equipped with the Java virtual machine.

9. The system as claimed in any of claims 6-8, wherein when at least two bytes of the extracted byte-code are combined to represent a logical value, the system being operable to combine the at least two bytes to generate the second code having the predetermined byte size.

10. The system as claimed in any of claims 6-9, wherein when the extracted byte-code is an op-code using a wide operand, the system is operable to convert to the op-code using the wide operand into an op-code not using the wide operand, and to generate the second code having the predetermined byte size including the converted op-code.
